# FASCICULE DE BREVET EUROPEEN

(11) **EP 3 156 698 B1**
(45) Date de publication et mention de la délivrance du brevet: **15.08.2018**
(21) Numéro de dépôt: 16193378.3
(22) Date de dépôt: 11.10.2016
(51) Int. Cl.: F16J 15/10, F16L 13/14, F16J 15/3232, F16J 15/06

(54) **JOINT A SECTION CONSTANTE**
VERBINDUNG MIT KONSTANTEM QUERSCHNITT
JOINT WITH CONSTANT CROSS-SECTION

(30) Priorité: 12.10.2015 FR 1559667
(43) Date de publication de la demande: 19.04.2017
(73) Titulaire: LE JOINT FRANCAIS SNC, 75008 Paris (FR)
(72) Inventeur: DUVAL-ARNOULD, Ludovic, 53200 CHATEAU-GONTIER (FR)
(74) Mandataire: Gevers & Orès

(56) Documents cités:
- EP-A1- 1 277 995
- EP-A1- 1 637 781
- EP-A2- 2 151 616
- DE-A1-102012 223 903

## Description

L'invention concerne un joint d'étanchéité, notamment un joint pour assurer l'étanchéité après sertissage de deux canalisations, par exemple des canalisations d'eau potable.

Le circuit d'adduction d'eau d'un bâtiment est généralement constitué de canalisations raccordées entre elles au moyen de raccords à presser munis de joints en caoutchouc. Un raccord à presser est un raccord comportant une gorge dans laquelle se trouve un joint, installé pour constituer un réseau, puis déformé par pressage au moyen d'une pince adaptée pour effectuer un sertissage et rendre le raccord indémontable avant la mise sous pression d'eau. Un tel assemblage consiste donc à insérer une canalisation soit autour du raccord, soit à l'intérieur du raccord. Dans le premier cas, la gorge est tournée vers l'extérieur du raccord et le joint est monté, dans la gorge, sur son diamètre intérieur sur le raccord. Dans le second cas, la gorge est tournée vers l'intérieur du raccord et le joint est monté sur son diamètre extérieur dans le raccord. Le réseau peut être réalisé en canalisations de métal tel que le cuivre, en PE réticulé ou non, monocouche ou multicouche, éventuellement avec couche métallique...

Dans tous les cas, l'étanchéité du raccord est essentielle. En effet, un bâtiment de plusieurs étages peut contenir des centaines voire des milliers de raccords et un dégât des eaux peut être très pénalisant pour le chantier ou pour le bâtiment en service, ces raccords étant souvent placés dans les murs ou les cloisons et donc inaccessibles.

Or il peut arriver que l'insertion de la canalisation fasse tourner le joint sur lui même, voire le fasse sortir de la gorge. L'état de Part propose des moyens pour stabiliser le joint dans la gorge, par exemple un joint dont la section axiale, qui est alors non circulaire, comporte une portion de plus grand rayon de courbure, voire rectiligne, cette section étant destinée à prendre place en fond de gorge. De cette façon, le joint est « stabilisé » en fond de gorge.

EP 1277995 A1 divulgue un joint annulaire approprié pour assurer un assemblage étanche entre une première et une seconde canalisations après sertissage, comportant un axe de révolution, dont le joint est en forme d'un polygone régulier en section. Un inconvénient de cette solution est que si le joint tourne malgré tout dans la gorge, il peut présenter soit une section plus importante et rendre l'assemblage plus dur, soit une section plus faible et compromettre l'étanchéité.

L'invention vise à résoudre ce problème. A cet effet, elle propose un joint annulaire destiné à assurer un assemblage étanche entre une première et une seconde canalisation après sertissage, comportant un axe de révolution, dont une section parallèle audit axe est une courbe formée d'une succession d'un nombre impair de segments de cercle Cᵢ reliés par des sommets Sᵢ formant un polygone régulier, i variant de 1 à 2*n+1, n étant un nombre entier positif supérieur ou égal à 1, le sommet Sᵢ étant le centre du segment de cercle Cᵢ passant par les sommets Sᵢ₊ₙ et Sᵢ₊ₙ₊₁ modulo 2*n+1.

On appelle sommet le point anguleux qui relie deux segments de cercle. En effet, à ce point, il existe une discontinuité de pente. Chaque sommet Sᵢ est le centre du segment de cercle Cᵢ passant par les deux sommets les plus éloignés de ce sommet. Il existe un nombre impair de sommets Sᵢ et de segments Cᵢ. Par modulo 2*n+1 on entend que si le nombre obtenu, par exemple n+i, est supérieur à 2*n+1. on enlève 2*n+1 pour obtenir un résultat compris entre 1 et 2*n+1. Par exemple si n = 2 et i = 4, n+i = 6 soit 1 modulo 5.

La courbe que forme cette section est par construction une courbe à section constante. ou courbe de largeur constante. Comparée à une section circulaire de même diamètre, elle est formée de segments de cercle de plus grand rayon de courbure que le cercle.

Un tel joint est avantageusement mais pas nécessairement de section circulaire transversalement à l'axe, il peut par exemple présenter une section transversale ovale.

Un tel joint présente donc deux avantages :
- Etant de section constante, il ne risque pas de provoquer les problèmes susmentionnés s'il roule à l'insertion d'une canalisation dans le raccord,
- Il possède des segments de grand rayon de courbure qui le stabilisent en fond de gorge.

Avantageusement, le polygone régulier peut être un pentagone.

La courbe obtenue dans le cas n = 1 est le triangle de Reuleaux. Dans l'application à un joint cependant, on préfèrera le cas n = 2, les sommets Sᵢ étant alors répartis sur un pentagone régulier.

Avantageusement, le joint peut comporter un plan de symétrie.

Dans ce cas, le nombre de sommets étant impair, un sommet Sᵢ se trouve obligatoirement dans ce plan de symétrie. Dès lors le joint, dont la surface comporte une portion « intérieure » tournée vers l'axe de révolution et une portion « extérieure » opposée à l'axe de révolution, peut présenter deux modes de réalisation :
- la portion « intérieure » comporte le sommet qui se trouve dans le plan de symétrie ; dans ce cas, le segment de cercle opposé à ce sommet se trouve sur la portion extérieure du joint et ce joint est adapté à une utilisation dans laquelle la canalisation est insérée à l'intérieur du joint.
- la portion « extérieure » comporte le sommet qui se trouve dans le plan de symétrie ; dans ce cas, le segment de cercle opposé à ce sommet se trouve sur la portion intérieure du joint et ce joint est adapté à une utilisation dans laquelle la canalisation est insérée à l'extérieur du joint.

Avantageusement, le joint peut comporter sur sa surface un bourrelet qui s'étend radialement et formé de portions, lesdites portions étant séparées par des discontinuités formant canaux de fuite avant sertissage.

La plupart des raccords sont conçus pour être étanches dès l'assemblage, c'est-à-dire avant le sertissage. Cependant l'étanchéité obtenue sans sertissage n'est pas parfaite ni pérenne. Des moyens ont donc été développés pour détecter les défauts de sertissage.

Il existe des solutions permettant de rendre fuyant un raccord qui n'est pas serti, permettant une action de test avant la mise en service en vue de découvrir d'éventuels raccords non sertis (systèmes« Leak Before Press » ou LBP) : on met le réseau sous pression d'air et une baisse de pression indique la présence d'un ou plusieurs raccords non sertis. Si l'installation le permet, on peut aussi mettre le circuit sous pression d'eau et chercher si une fuite se déclare.

Ces solutions soit sont visuelles (le raccord comporte un anneau en plastique qui est détruit par l'action de sertissage), soit agissent grâce à une géométrie particulière du raccord (le raccord comporte des creux dans la gorge, qui sont écrasés lors du sertissage), soit reposent sur une géométrie particulière du joint.

On utilise par exemple des joints qui présentent une réduction locale de la section du joint, torique ou de forme spéciale (ovale, à lèvre, en forme de triangle...), rendant le joint non étanche tant que le joint n'est pas serti, par absence d'écrasement de ladite section et donc de contact. La réduction de la section est parfois entourée de renflements ou de boursouflures pour accentuer l'effet de perte de contact. Un inconvénient de cette solution par réduction locale de la section réside dans le fait qu'une fois le raccord serti, l'étanchéité est réalisée aux endroits des réductions par une section réduite, elle est donc beaucoup moins robuste et pérenne.

Une autre solution consiste à créer une augmentation locale de la section du joint. Dans ce cas, cette surépaisseur créé la fuite sur ses cotés avant pressage.

Dans la solution proposée, le joint comporte un bourrelet qui s'étend radialement à partir de sa surface, le sens radial étant compté à partir du centre O de la courbe que forme la section du joint, c'est-à-dire du centre du cercle circonscrit. Ce bourrelet est destiné à écarter la surface du joint de celle de la première ou de la deuxième canalisation et à créer des fuites tant que le joint n'est pas serti. Comme ce bourrelet comporte des segments séparés par des discontinuités, ces dernières créent des canaux de fuite bien individualisés avant sertissage de l'assemblage. Les segments de bourrelet occupent une part substantielle de la circonférence sur laquelle il se trouve.

Un tel joint avec bourrelet peut présenter deux modes de réalisation :
- le bourrelet peut s'étendre à partir d'un segment de cercle, par exemple le segment de cercle coupant le plan de symétrie et donc destiné à se placer en fond de gorge,
- le bourrelet peut s'étendre à partir d'un sommet.

Avantageusement, le bourrelet peut s'étendre dans le plan de symétrie du joint.

Avantageusement, la hauteur du bourrelet par rapport à la surface du joint est inférieure à 20 % du rayon du cercle circonscrit à la section du joint, de préférence inférieure à 10 % du rayon du cercle circonscrit.

Avantageusement, le bourrelet peut comporter de 2 à 10 portions.

Des modes de réalisation et des variantes seront décrits ci-après, à titre d'exemples non limitatifs, avec référence aux dessins annexés dans lesquels :
La figure 1 illustre une courbe à section constante (ou largeur constante),
Les figures 2A et 2B représentent des joints dont la section est une courbe à section constante s'appuyant sur un pentagone régulier,
La figure 3 illustre un joint en place dans une gorge de raccord à sertir,
La figure 4 représente la variation de l'effort de compression en fonction du déplacement d'un outil pour deux joints annulaires, un joint à section circulaire et un joint selon l'invention,
La figure 5 représente le joint de la figure 2A comportant en plus un bourrelet interrompu.

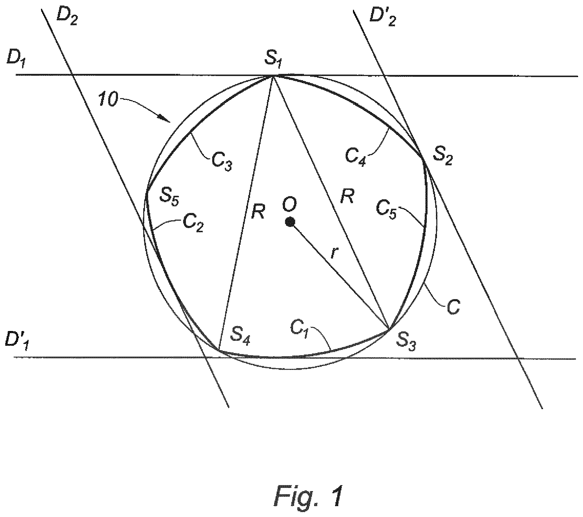

La courbe fermée 10 de la figure 1 est construite en s'appuyant sur les sommets S₁ à S₅ d'un pentagone régulier, on se situe donc dans le cas n = 2. Entre les sommets s'étendent des segments en arc de cercle C₁ à C₅, de rayon R. Chaque sommet Sᵢ est le centre du segment de cercle Cᵢ le plus éloigné du sommet Sᵢ sur cette courbe, entre les sommets Sᵢ₊ₙ et Sᵢ₊ₙ₊₁. Par exemple, le segment C₁ opposé au sommet S₁ s'étend entre les sommets S₃ et S₄. On appelle courbe de largeur constante une courbe plane fermée dont la largeur, mesurée par la distance entre deux droites parallèles opposées qui lui sont tangentes, est la même quelle que soit l'orientation de ces droites. Comme illustré en figure 1, dans le cas de droites parallèles D1, D'1 ou D2, D'2, l'une passera toujours par un sommet Sᵢ et l'autre sera tangente au segment de cercle opposé Cᵢ. En conséquence la distance entre deux telles droites sera toujours égale à R, quelle que soit leur orientation.

Le pentagone est inscrit dans un cercle C de centre O et de rayon r (partiellement dessiné). On voit que le rayon R des segments Cᵢ est nettement plus grand que le rayon r du cercle circonscrit.

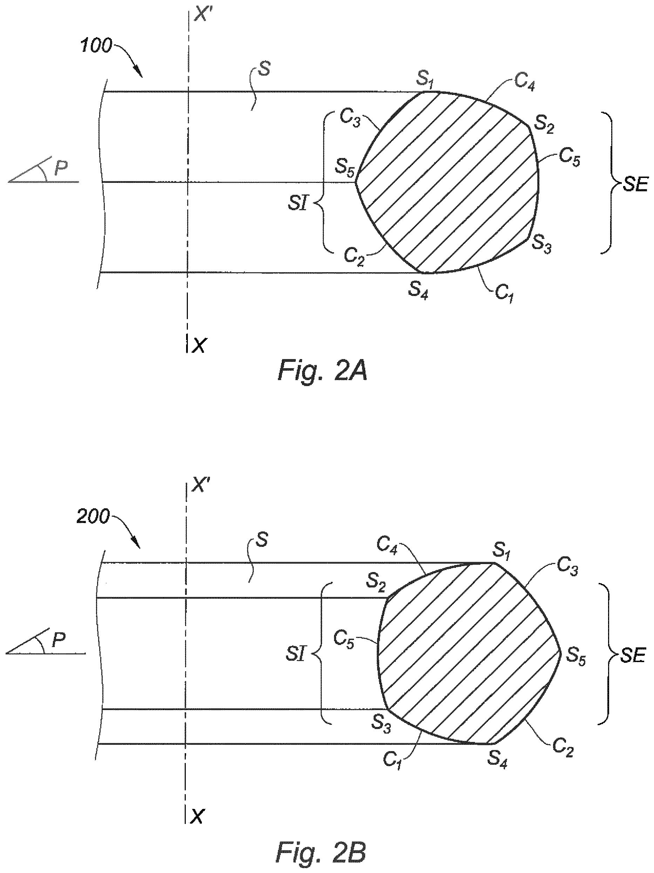

Les figures 2A et 2B illustrent des joints 100, 200 comportant un axe de révolution X-X' et dont une coupe parallèle à cet axe est une courbe semblable à celle de la figure 1.

Les joints illustrés en figures 2A et 2B comportent un plan de symétrie P.

Comme illustré sur la figure 2A, on peut définir une portion intérieure SI de la surface S du joint 100, tournée vers l'axe X-X', ici comportant les segments C₂ et C₃, et une portion extérieure SE de la surface S du joint à l'opposé de l'axe X-X', ici comportant les segments C₁, C₄ et C₅. Le sommet S₅ se situe dans le plan de symétrie P du joint 100 et sur la portion intérieure SI du joint 100. A l'inverse, le segment C₅ intersecte le plan de symétrie et est situé sur la portion extérieure SE du joint. Le segment C₅ est prévu pour prendre place dans une gorge de raccord à sertir. En conséquence, le joint 100 est adapté à une insertion par l'intérieur du joint.

Dans le joint 200 illustré sur la figure 2B en revanche, le sommet S₅ est cette fois situé sur la portion extérieure SE de la surface S du joint qui comporte les segments C₂ et C₃, la portion intérieure SI de la surface S du joint comportant les segments C₁, C₄ et C₅. Comme précédemment, le segment C₅ est prévu pour prendre place dans une gorge de raccord à sertir mais il se trouve cette fois sur la portion intérieure SI du joint. En conséquence, le joint 200 est adapté à une insertion par l'extérieur du joint.

Comme il a été vu dans le cadre de la figure 1, les segments Cᵢ ont un rayon de courbure R supérieur à celui d'un joint de section circulaire circonscrit au polygone, de sorte qu'un tel joint 100, 200 est plus stable qu'un joint de section circulaire lorsqu'un segment Cᵢ se trouve en fond de gorge.

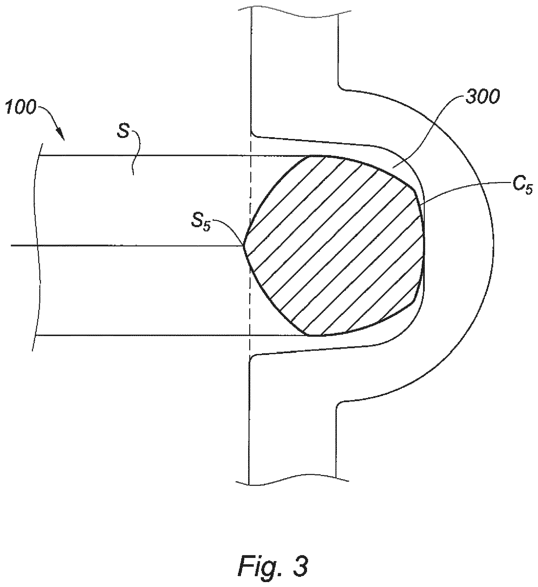

La figure 3 illustre cette situation : le joint 100 se trouve dans une gorge 300 de joint à sertir, le segment C₅ étant en fond de gorge et stabilisant le joint.

L'examen de la figure 1 montre de plus qu'à largeur identique, tel que définie en relation avec la figure 1, un tel joint 100, 200 comporte moins de matière qu'un joint de section circulaire.

Par la suite on appellera joint pentagonal un tel joint.

Des calculs aux éléments finis ont été effectués pour comparer le comportement de deux joints composés du même matériau (dureté shore : 65 ShA), un joint à section circulaire et un joint pentagonal, de même largeur comme définie en relation avec la figure 1. Les joints sont placés dans une gorge de section sensiblement carrée ou rectangulaire ; une paroi de cette gorge formant outil est mobile et comprime le joint radialement. On mesure l'effort en fonction du déplacement de l'outil.

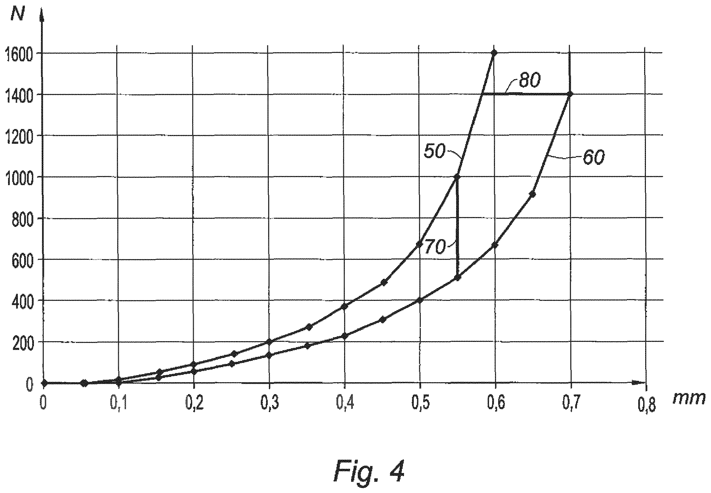

La figure 4 est un graphique comportant des courbes de variation de l'effort en Newton en fonction du déplacement de l'outil en mm pour de tels joints, courbe 50 pour le joint pentagonal et courbe 60 pour le joint de section circulaire. On voit que le joint pentagonal résiste mieux au confinement que le joint à section circulaire :
- Par exemple, le segment de droite 70 montre qu'à un déplacement de l'outil de 0,55 mm correspond un effort d'environ 1 000 N pour le joint à section circulaire et de seulement environ 500 N pour le joint pentagonal ;
- Le segment de droite 80 montre qu'un effort de 1 400 N permet d'obtenir un déplacement d'environ 0,57 mm pour le joint à section circulaire et de 0,7 mm pour le joint pentagonal.

Le joint pentagonal présente une meilleure résistance au confinement, défini comme la contrainte appliquée par les parois de la gorge dans le sens axial pour le joint. Le cas peut se produire par un jeu défavorable des tolérances. Le joint pentagonal offre une meilleure tolérance Il s'agit d'un avantage important par rapport au joint à section circulaire. En effet, au sertissage les joints sont sollicités mécaniquement et si cette sollicitation est trop forte, il existe un risque de rupture totale ou partielle et donc risque de fuite.

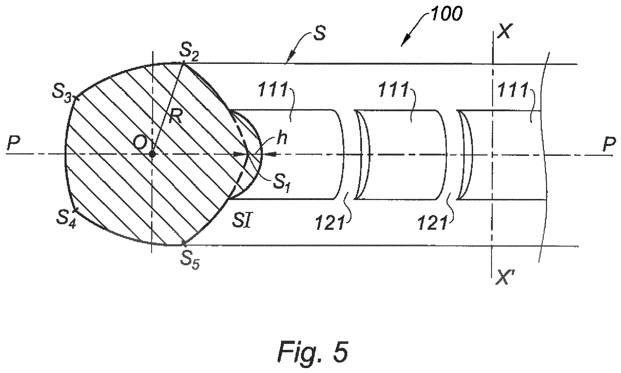

La figure 5 illustre une section transversale d'un autre mode de réalisation du joint 100. Dans ce mode de réalisation, le joint comporte sur sa surface S un bourrelet discontinu formé de segments 111 séparés par des canaux 121. Tel que représenté en figure 5, le bourrelet se trouve sur la portion intérieure SI de la surface S du joint 100 et dans le plan P de symétrie du joint 100. Il s'élève d'une hauteur h au-dessus du sommet S_{I} du joint pentagonal. Il pourrait bien sûr s'étendre à partir de la portion extérieure SE de la surface S du joint et/ou à partir d'un segment de cercle Cᵢ (non représenté).

La section transversale du bourrelet illustré en figure 5 présente une forme de lunule, c'est-à-dire qu'elle est délimitée par un cercle de rayon bien inférieur au rayon R des segments de cercle Cᵢ. La hauteur h de la lunule doit être suffisante pour que des fuites se produisent dans les canaux 121 avant sertissage, mais pas excessive pour que les segments de bourrelet s'effacent bien par élasticité après sertissage. Dans le cas illustré, le rapport entre la hauteur h de la lunule et le diamètre (ce diamètre étant égal à 2*r) du cercle inscrit C à la section du joint est égal à 0,1/1 = 10 %. De façon plus générale, il a été établi que le rapport h/2*r est de préférence compris entre 10 % et 20 % (pour faciliter la compréhension, la lunule de la figure 5 est grossie). Par exemple, en valeur absolue, pour des joints de section (ou diamètre) allant de 1.50 mm à 5 mm. la hauteur h du bourrelet peut aller de 0.10 mm à 0,30 mm.

L'invention n'est pas limitée par la description qui précède. Elle concerne notamment :
- D'autres formes de courbe de largeur constante, par exemple s'appuyant sur un triangle (n = 1) ou un heptagone (n = 3),
- Des joints asymétriques, c'est-à-dire ne comportant pas de symétrie,
- des bourrelets qui ne s'étendent pas dans le plan de symétrie du joint mais par exemple dans un plan parallèle au plan de symétrie, voire qui forment une hélice autour du joint,
- d'autres formes de bourrelet que la lunule, par exemple une anse de panier, une combinaison de courbes et de segments de droite, pour autant que le bourrelet ne soit pas continu.

## Revendications

1. Joint annulaire (100, 200) destiné à assurer un assemblage étanche entre une première et une seconde canalisations après sertissage, comportant un axe de révolution (X-X'), dont une section parallèle audit axe est une courbe formée d'une succession d'un nombre impair de segments de cercle Cᵢ reliés par des sommets Sᵢ formant un polygone régulier, i variant de 1 à 2*n+1, n étant un nombre entier positif supérieur ou égal à 1, le sommet Sᵢ étant le centre du segment de cercle Cᵢ passant par les sommets Sᵢ₊ₙ et Sᵢ₊ₙ₊₁ modulo 2*n+1.

2. Joint selon la revendication 1, **caractérisé en ce que** le polygone régulier est un pentagone.

3. Joint selon l'une des revendications précédentes, **caractérisé en ce qu'**il comporte un plan de symétrie (P).

4. Joint selon la revendication 3, dont la surface comporte une portion « intérieure » (SI) tournée vers l'axe de révolution (X-X') et une portion « extérieure » (SE) opposée à l'axe de révolution, **caractérisé en ce que** la portion « intérieure » comporte un sommet Sᵢ qui se trouve dans le plan de symétrie (P).

5. Joint selon la revendication 3, dont la surface comporte une portion « intérieure » (SI) tournée vers l'axe de révolution (X-X') et une portion « extérieure » (SE) opposée à l'axe de révolution, **caractérisé en ce que** la portion « extérieure » comporte un sommet qui se trouve dans le plan de symétrie (P).

6. Joint selon l'une des revendications précédentes, **caractérisé en ce qu'**il comporte sur sa surface (S) un bourrelet (111) qui s'étend radialement et formé de portions, lesdites portions étant séparées par des discontinuités (121) formant canaux de fuite avant sertissage.

7. Joint selon la revendication 6, **caractérisé en ce que** le bourrelet (111) s'étend à partir d'un segment de cercle (Cᵢ).

8. Joint selon la revendication 6, **caractérisé en ce que** le bourrelet (111) s'étend à partir d'un sommet (Sᵢ).

9. Joint selon les revendications 3 et 6, **caractérisé en ce que** le bourrelet (111) se trouve dans le plan de symétrie (P) du joint (100).

10. Joint selon l'une des revendications 6 à 9, **caractérisé en ce que** la hauteur (h) du bourrelet (111) par rapport à la surface (S) du joint (100) est inférieure à 20 % du diamètre du cercle circonscrit à la section du joint, de préférence inférieure à 10 % du diamètre du cercle circonscrit.

11. Joint selon l'une des revendications 6 à 10, **caractérisé en ce que** le bourrelet (111) comporte de 2 à 10 portions.

## Patentansprüche

1. Dichtungsring (100, 200) zum Gewährleisten einer dichten Anordnung zwischen einer ersten und einer zweiten Rohrleitung nach einem Crimpen, umfassend eine Drehachse (X-X'), bei der ein Abschnitt parallel zur Achse eine Kurve ist, die durch eine ungerade Anzahl der Kreissegmente Cᵢ gebildet wird, die durch Spitzen Sᵢ verbunden sind, die ein regelmäßiges Polygon bilden, wobei i eine Variante von 1 bis 2*n+1 ist, n eine positive Ganzzahl größer als oder gleich wie 1 ist, die Spitze Sᵢ die Mitte des Kreissegments Cᵢ ist, das über die Spitzen Sᵢ₊ₙ und Sᵢ₊ₙ₊₁ Modulo 2*n+1 verläuft.

2. Dichtung nach Anspruch 1, **dadurch gekennzeichnet, dass** das regelmäßige Polygon ein Pentagon ist.

3. Dichtung nach einem der vorstehenden Ansprüche, **dadurch gekennzeichnet, dass** sie eine Symmetrieebene (P) umfasst.

4. Dichtung nach Anspruch 3, deren Fläche einen der Drehachse (X-X') zugewandten "inneren" Abschnitt (SI) und einen der Drehachse gegenüberliegenden "äußeren" Abschnitt (SE) umfasst, **dadurch gekennzeichnet, dass** der "innere" Abschnitt eine Spitze Sᵢ umfasst, die sich auf der Symmetrieebene (P) befindet.

5. Dichtung nach Anspruch 3, deren Fläche einen der Drehachse (X-X') zugewandten "inneren" Abschnitt (SI) und einen der Drehachse gegenüberliegenden "äußeren" Abschnitt (SE) umfasst, **dadurch gekennzeichnet, dass** der "äußere" Abschnitt eine Spitze umfasst, die sich in der Symmetrieebene (P) befindet.

6. Dichtung nach einem der vorstehenden Ansprüche, **dadurch gekennzeichnet, dass** sie auf ihrer Fläche (S) einen Wulst (111) umfasst, der sich radial erstreckt und aus Abschnitten gebildet ist, wobei die Abschnitte durch Unterbrechungen (121) getrennt sind, die vor dem Crimpen Leckagekanäle bilden.

7. Dichtung nach Anspruch 6, **dadurch gekennzeichnet, dass** sich der Wulst (111) von einem Kreissegment (Cᵢ) erstreckt.

8. Dichtung nach Anspruch 6, **dadurch gekennzeichnet, dass** sich der Wulst (111) von einer Spitze (Sᵢ) erstreckt.

9. Dichtung nach einem der Ansprüche 3 bis 6, **dadurch gekennzeichnet, dass** sich der Wulst (111) in der Symmetrieebene (P) der Dichtung (100) befindet.

10. Dichtung nach einem der Ansprüche 6 bis 9, **dadurch gekennzeichnet, dass** die Höhe (h) des Wulsts (111) in Bezug auf die Fläche (S) der Dichtung (100) weniger als 20 % des Kreisdurchmessers ist, der auf den Dichtungsabschnitt beschränkt ist, bevorzugt weniger als 10 % des beschränkten Kreisdurchmessers.

11. Dichtung nach einem der Ansprüche 6 bis 10, **dadurch gekennzeichnet, dass** der Wulst (111) 2 bis 10 Abschnitte umfasst.

## Claims

1. Annular seal (100, 200) designed to provide a sealed connection between a first and a second pipe after crimping, comprising an axis of revolution (X-X'), of which a section parallel to said axis is a curve made up of a successive odd number of segments of a circle Cᵢ connected by vertices Sᵢ forming a regular polygon, i varying from 1 to 2*n+1, n being a positive integer greater than or equal to 1, and the vertex Sᵢ being the centre of the segment of circle Cᵢ passing through the vertices Sᵢ₊ₙ and Sᵢ₊ₙ₊₁ modulo 2*n+1.

2. Seal according to claim 1, **characterised in that** the regular polygon is a pentagon.

3. Seal according to one of the preceding claims, **characterised in that** it comprises plane of symmetry (P).

4. Seal according to claim 3, where the surface comprises an "interior" portion (SI) oriented towards the axis of revolution (X-X') and an "exterior" portion (SE) opposite the axis of revolution, **characterised in that** the "interior" portion comprises a vertex Sᵢ which is in the plane of symmetry (P).

5. Seal according to claim 3, where the surface comprises an "interior" portion (SI) oriented towards the axis of revolution (X-X') and an "exterior" portion (SE) opposite the axis of revolution, **characterised in that** the "exterior" portion comprises a vertex that is in the plane of symmetry (P).

6. Seal according to one of the preceding claims, **characterised in that** it comprises on its surface (S) a bulge (111) that extends radially and is made up of portions, said portions being separated by discontinuities (121) forming outlet channels before crimping.

7. Seal according to claim 6, **characterised in that** the bulge (111) extends from a segment of circle (Cᵢ).

8. Seal according to claim 6, **characterised in that** the bulge (111) extends from a vertex (Sᵢ)

9. Seal according to claims 3 and 6, **characterised in that** the bulge (111) is in the plane of symmetry (P) of the seal (100).

10. Seal according to one of claims 6 to 9, **characterised in that** the height (h) of the bulge (111) with respect to the surface (S) of the seal (100) is less than 20 % of the diameter of the circumscribed circle at the section of the seal, preferably less than 10 % of the diameter of the circumscribed circle.

11. Seal according to one of claims 6 to 10, **characterised in that** the bulge (111) comprises 2 to 10 portions.
